# EUROPEAN PATENT SPECIFICATION

(11) **EP 2 480 615 B1**
(45) Date of publication and mention of the grant of the patent: **26.03.2014**
(21) Application number: 10770890.1
(22) Date of filing: 20.09.2010
(51) Int. Cl.: C09D 163/00, B29C 63/00

(54) **EPOXY FOIL AND PREPARATION METHOD THERFOR**
EPOXIDFOLIE UND METHODE ZU IHRER HERSTELLUNG
FEUILLE ÉPOXYDE ET SON PROCÉDÉ DE PRÉPARATION

(30) Priority: 22.09.2009 NL 1037302
(43) Date of publication of application: 01.08.2012
(73) Proprietor: ECOflex B.V., 5801 PX Venray (NL)
(72) Inventor: Woudsma, Jacob, 5801 PX Venray (NL)
(74) Representative: Jansen, Cornelis Marinus
(86) International application number: PCT/NL2010/000133
(87) International publication number: WO 2011/037449

(56) References cited:
- EP-A1- 0 588 437
- WO-A1-2006/119770
- DE-C1- 4 038 181
- JP-A- 11 171 971
- JP-A- 54 120 675
- JP-A- 2001 049 000
- US-A- 5 395 108
- US-A- 5 686 185

## Description

The protection and maintenance of wood, stone, concrete glass etc., constitutes an important issue in the preservation of houses and buildings.

In 1992 the first breakthrough was achieved by developing a flexible epoxy adhesive applied as a wood sealant under the names Timby Flex, - Repair, -Gum, -Fix and - Crack etc.

In 1993, these epoxy adhesives were used in the renovation and maintenance of wooden frames. (Dutch patent 193253). For the first time it was possible to apply - without formwork - vertical slits in the wood by filling with erectable well adjustable elastic epoxies and/or sealing the ends of window pine frames for sealing and/or restoration.

In 1995, instead of standard coatings, a PVC foil was introduced in the Netherlands for protection of wood. The standard adhesive applied on PVC foil is an acrylic adhesive, as stated in the Dutch patent 9500261. This product served as a substitute for paint on wood, since generally paint will only last a relatively short period (3 to 8 years).

However, on the affected sides of wooden frames the paint would start to peel off first. This is usually the case in wooden sills when exposed to moisture stress in the lower corner joints of frames. The PVC foil was not suitable, since the material turned brittle at lower temperatures and owing to moisture or condensation under the foil the acrylic adhesive used failed separately. Moreover, the semi-flexible PVC foil would show cracks.

In a later Dutch patent 1002287 these problems were partly solved by a more delicate and special application preparation. This system also has the disadvantage that it is not only laborious, time consuming and therefore expensive, but also that in or on the corner joint different types of fillers or adhesives are used such as polyurethane sealants, polysulfide, silicone, polyesters and epoxies.

In 1998 a major breakthrough improvement was achieved by an invention as mentioned in Dutch patent 1009134 and WO9958591 (Al): a new eco-technology for the application of elastic epoxy adhesives or coatings or levelling products.

In EP-A-0 588 437, a composite structure is disclosed for use in any application where flexural stiffness, buckling or minimum gauge construction is used. It describes a rigid material used to replace prepreg plies where the intent is to increase stiffness by increasing thickness. Thereto, epoxy resins are used in combination with curing agents to form solid, infusible product.

CZ 295903 B6 teaches laminates wherein in one of the layers an epoxy may be present.

However, all these new products still have the disadvantage that during the preparation of the mixture certain substances (multi-component system) are released that may cause an allergic reaction due to skin contact or inhalation. Furthermore, as objects after being treated often need additional treatment in terms of equalling or sanding, which in practice is problematic and very costly. In this Dutch patent the waiting time between stepwise repairs of surface finishing are still very uncertain in winter and may still take too much time and too expensive. The inferior coating properties of elastic products constitute a major problem. In the application of such resins it is a disadvantage that the curing time of epoxies is often too fast, which results in a wrinkled or uneven surface and/or air bubbles. Another disadvantage is that a leak proof sealing of the edges between the floors and walls is difficult to obtain.

The objective of the present invention is a process and/or product(s) based on sealants and/or foils, which prevents or reduces the abovementioned disadvantages. Thus resulting in huge savings in terms of actions and followed procedures but also, surprisingly, a better protection of the repaired object by an improved sealing method, besides protection of the surface.

In a first aspect, the present invention relates to an elastic epoxy foil having a thickness between 0.01 and 1.50 mm, comprised of (a) an epoxy resin wherein the epoxy resin is a modified reaction product of bisphenol A and bisphenol F with epichlorohydrin having a molecular weight ≤ 700 and (b) a hardener, wherein the hardener is selected from polyols, polyether amines, modified cycloaliphatic polyamines, polymercaptanes, polysulfides, polyaminecyanide, or combinations thereof, wherein the epoxy resin is used together with an equivalent or non-equivalent amount of hardener.

In a second aspect, the invention is directed to a method for the preparation of the elastic epoxy foil according to claim 1.

In a third aspect, the invention covers the use of the epoxy foil according to the invention for the protection or sealing of wood, concrete, stone, glass, metal, plastic, textiles, *etc.*

The preparation of the epoxy foil allows for important properties: it is adjustable, elastic and reactive. The basis for these is that the ratio between the main components vary being a strong "undercured" composition to an "overcured" composition, surprisingly being an low to an high elastic epoxy. In practice, fulfilling the painting requirements as described in the patent 1009134 only as undercured system. For example, polyetherpolyamine is applied in the range below equivalent (e.g. 200H active equivalent) or above equivalent.(e.g. 300H active equivalent) based on the stoichiometric ratio of 250H active equivalent.

When applied in combination with a polysulfide like, for example, "polymercaptane" it creates not only a faster curing, but also it can create a more elastic epoxy foil. This makes it suitable not only because of its higher elasticity for each instance of teak wood to less soft pine or spruce, but also guarantees the best adhesion or protection for other objects such as glass, metal or concrete. By applying this new preparation, the reactivity of the foil also retains its adhesive properties, even at lower or higher temperatures, as a foil on timber or other suitable surfaces. The application can be applied without waiting, thus almost saving the standard application costs.

The epoxy foil belongs to the group of multi components which are more elastic epoxy using more amine per equivalent as harder to adjust, for example, DER 358 from Dow chemical or Polypox 270/700 from Huntsman or Araldite GY783/784/250/794, all cure with polyamines. The hardeners can be different curable products for epoxy resins on combinations thereof as air, UV light, moisture, water, polyols, polyether amines, modified cycloaliphatic polyamines, polymercaptane, polysulfide, polyaminecyanide, polyaminomidazoline etc. The top layer of the single foil can protect against weather and the underlying elastic foil is then fixed to the surface. A polyether/polyamine Aradur e.g. 76 or 3275 (3275 is a recently improved version and is less toxic, contains less volatile elements and no nonylphenol anymore) reducing greatly the emission of dangerous fumes. Preferably applied in combination with one or more polysulfide compounds such as polysulfide or polymercaptane Aradur 90/Flep 60. With the great advantage that no additional plasticizer needs to be added anymore. So other reactive epoxy products in the same base composition can therefore always be better bonded for extra stabilization reasons. Surprisingly, this is achieved through finishing systems based on an undercured elastic epoxy adhesive (shore hardness D 47 or less) and/or a universal epoxy foil of e.g. 80 mu thickness fixed together as an elastic sealant. Products respond to a mutual chemical reaction, caused by a different combination, from the physical viewpoint, namely liquid systems and cured systems will finally be settled in a cured chemically attached elastic mass. Foil coating/ foil primer foil adhesives/ foil sealants/ foil repairs/ foil filling/ foil levelling as agent products/ etc. are, indirectly or directly by reacting with each other or macromoculair linked. It also has the great additional advantage that handling can be planned better because the waiting time is under control. Today within the current epoxy technology this is not possible.

The applicable adjustable elastic epoxy foil can be pigmented and applied on many types of materials, such as wood, glass, stone, concrete, metal and plastics. The foil thickness can be cast and produced as prefabricated foil to save application costs.

For each surface the foil can be modified by modifying the relationship between the resin and hardener. Hereby the optimal properties can be achieved by using a single layer or a multi-layer active foil. Based on the same principle, components can be built into an active layer thickness or blending it with other polymers. By the same principle of the undercuring, epoxy foil can be applied and react with a standard or undercured or an overcured underlying adhesive.

The epoxy foil also has cleansing properties by using fillers such as Cab-O-Sil and/or Nytal etc. dirt can be removed easily. This is also the case for micro-organisms e.g. antifouling systems for e.g. ships. Algae or barnacles can be removed mechanically.

For example, when two or more of a different type of foil such as a plastic pvc and a epoxy have a decreasing meltable adhesive force due to a different property between the main components. This allows the contaminated upper layer with a much greater thickness of the underlying laminate to be removed more easily. Then a new non-polluted original layer is replaced by induction by applying preferably a copper and/or zinc foil.

This principle could for example be of importance for the exterior of boats or yachts or even tankers. This epoxy foil also has the advantage that no waiting time is anymore needed for the curing, which is applied in the subsoil and in the connections between materials such as glass, concrete, brick walls. Any irregularities can instantly be adequately removed or levelled. The epoxy foil can be applied on an epoxy coating or on a modified epoxy adhesive. The foil has a different degree of self-fixing nature or reactivity and/or elasticity. This results, surprisingly, in no need for extra additions adhesives or plasticizers. Adhesion to the substrate is much more durable than any other standard foil making it very suitable for sealing of swimming pools.

By preference a rubber-based insulating foil can be made, which also is suitable for roofs, as well as for floors or ceilings. This insulation foil consists of multiple layers changing the ratio between the resin and hardener and also the adhesion of the different type of foils applying as laminates can be adjusted. The thickness is determined by the number of layers. The thickness varies depending on the desired lifetime of the foil. By adding to the basic formulas of sealants such as polysulphide and/or silicone and/or rubbers such as chlorinated rubber, NBR, etc. the property of melting ability is more or less increasing. This is a benefit to be included in the production of the foil or laminate and also in case the top laminate later will be replaced or removed after aging, damage or for the application of a different colour.

The adjustable tack and/or adhesion of the reactive foil has the advantage that the foil can be applied together with various other systems, such as rubber junctions of glass greenhouses, etc.. This system can also be made as a transparent foil provided with solar cells producing energy placed on roofs, brick walls, glass etc.

Through combination with a pre-selected pigment concentrate in these systems the epoxy foil can be applied for new buildings, using RAL colours, which not only allows producing standard colours, but also preventing additional labour and is making the surface with a primer and/or a final coating unnecessary. Preferably applying a thicker foil or two laminates on the most damage-sensitive parts of the substrate such as the sills of windows and/or some of the horizontal parts of the sills with an additional non-elastic epoxy foil or polyester or polyurethane or acrylic polyester foil making it scratch resistant and also chemically be bonded as an elastic epoxy system. This allows not only possible transport damage or a significant degradation or prevents them from occurring. In practice extra maintenance sensitive parts usually need an extra protection and well in those places, which are exposed to more windier and sunlight conditions. By preselecting the same adhesive composition of the major components in both the foil and the sealant. A PVC foil or other foils can be applied with the characteristic that a plastic (PVC / polysulfide) foil, elastic (polyurethane / silicone /EPDM /NBR or Nitrile Butadiene Rubber with different content of nitril) foil or a non-elastic (polyester/epoxy) foil or a semi-elastic foil (acrylate/methacrylate) as a part of an epoxy foil.

A perforated foil like a polyethylene, propylene foil etc. will provide the adjustable liquid epoxy adhesive or coating on the top of the surface of the applied foil by forcing the applied liquid adhesive through the openings thereof. Similar components of the sealant connects the enclosed or enveloped foil with the chosen type of foil. The application is subject to the requirements of the final product to be made. In case of damage to the foil for example in the transport of wood/plastic/ metal frames at the workplace or by vandalism or children playing perhaps an additional foil or removal of the old invisible problem can be repaired or replaced. The epoxy foil is repairable by using a similar chemical adhesive, filler, coating or sealant. The recyclability of the replacement products is even less problematic or dangerous than other foils, such as PVC.

### Example 1 for the repair of an existing or a new timber frame etc.

An elastic epoxy foil or a variant thereof e.g. features a thickness between 0.01 to 0.50 mm for indoor use with a low vapour-moisture permeability and/or 0.02 - 1.5 mm for outdoor use. This epoxy foil can be combined with an applied epoxy adhesive to even a vapour of moisture permeability under the surface. The epoxy foil can instantly, without waiting, be placed on the surface of a wooden frame or on other similar products, such as a new modified epoxy foil based on a polysulfide - and/or polyurethane. After first filling nail holes, milled holes, slots, etc., after removal of dry rot, filling it with an undercured elastic epoxy based repair product and/or a combination of a slow or fast elastic epoxy product or a modification of it after that the substrate is pre-treated with a fixation, a liquid curing adhesive and/or an elastic foil. After that the substrate is also smoothed and old paint is removed e.g. the seams between the horizontal and vertical styles on the corner has to be milled 4mm deep and 6mm wide before filling it. On the connection of the wooden frame with a glass window an pigmented epoxy foil with an under- or overcured epoxy adhesive can be applied protecting and sealing the material such as wood, concrete etc..

### Example 2.

A flexible, reactive epoxy foil of about 0.05 to 1.0 mm based on polyetherpolyamine as in Aradur 76 or 3258, was produced about 20% below the stoichiometric ratio. Replacement partly by another hardener, such as polysulfide or polymercaptane falls within the same principle in terms of permanent flexibility including the reciprocal combinations thereof. A single-sided foil produced by a foil with a multi-layer connecting e.g. a less elastic foil with a higher elastic foil. The thickness of the multi-layer foil can also varying and can be combined with other foils provided with insulating material such as polystyrene or polyurethane with closed or open-air cells, which provide excellent insulation properties. Combined with rubber or silicone the elasticity (or without but only overcured epoxy) of the epoxy can be reduced to a shore hardness D of at least 30 depending on whether this requirement has to be painted over. This epoxy foil offers the advantage that with pigments it can be applied in every RAL colour. This has moreover the advantage that the addition of application of silicone or polysulfide in practice is not an objective anymore, since a higher elasticity of the foil does not need to be repainted anymore and will be a solution and a new possibility to produce. Where the layer thickness is too high and air inclusion in the foil threatens a perforated foil can be a solution for this problem.

### Example 3.

Preparation of the top layer of a single reactive epoxy foil or a reactive double-sided process, implementation and their combination:
1. Timby Flex adhesive 1 (100 grams epoxy resin ratio polyether polyamine Polypox 700 and 129 grams of Poly Service hardener such as Aradur 76(Huntsman) are mixed at the stoichiometric ratio and about 25% (silicone and/or rubbers, such as Nitrile Butadiene Rubber and/or chlorinated rubber and/or polysulfide, etc.) calculated on the entire mass. The pigment concentrations are presented as a range of RAL colours, which are usually common in practise. The viscosity and thixotropical properties of these products is adjustable, so that through an injection moulding machine under pressure a foil thickness can be adjusted up to an elastic epoxy foil with a thickness of 0.020 to 1.50 mm.
2. Timby Flex adhesive 1 is a mixed ratio of 10-50% lower (10-50% lower as undercured and Timby Flex adhesive 2 a 10-100% higher as overcured system) than the stoichiometric ratio with Aradur 76/3275 and DER 358- from Dow Chemical- without pigments but with 10-125% silicone and/or sulphur compounds at 10-125% preferably in combination with a polysulfide and/or a polymercaptane. This mass is hardened and applied in an extruder/injection moulding machine. Then stretching it on a rolling mill of teflon or polypropylene till a thickness of 0.020 to 1.50 mm. This process creates rubber sealants, which can be used in conjunction with the undercured or overcured elastic epoxy foil, because of its special elastic characteristics.

### Example 4.

Another preparation is emulsifying the epoxy resin and hardener in a water medium, dissolving it in a medium or carrier, and later through vaporization, increasing the temperature and/or evaporation of the water making the layer thickness of the foil in one or more steps.

### Example 5.

The elastic foil is a single sided reactive foil with a foil finish as a top coat. Through the first foil, a second two sided reactive foil can be reacted by binding or connecting them under pressure on the roller mill creating a single-sided foil based on two or more foils. The foil still have an overcured or an undercured reactive adhesive properties. This is offering the advantage that an extra adhesive is not necessary anymore using an epoxy foil.

### Example 6.

An under- or an overcured epoxy adhesive can be applied directly on wood, after which without waiting the pigmented elastic and/or reactive, overcured and/or undercured, epoxy foil is applied. In that case it is not necessary to paint the wood surface anymore. In case of painting the foil can be applied as a wholly or partially perforated epoxy foil. Several elastic epoxy foils together, specifies the final properties of the layer thickness of the epoxy foil protecting and/or sealing the window frames made from wood, steel, plastic, etc..

## Claims

1. Elastic epoxy foil having a thickness between 0.01 and 1.50 mm, comprised of (a) an epoxy resin wherein the epoxy resin is a modified reaction product of bisphenol A and bisphenol F with epichlorohydrin having a molecular weight ≤ 700 and (b) a hardener, wherein the hardener is selected from polyols, polyether amines, modified cycloaliphatic polyamines, polymercaptanes, polysulfides polyaminecyanide, or combinations thereof, wherein the epoxy resin is used together with an equivalent or non-equivalent amount of hardener.

2. The epoxy foil according to claim 1, which is reactive by using the hardener in an undercured or overcured ratio.

3. The epoxy foil according to claim 1 or claim 2, wherein the hardener is a polyether amine.

4. The epoxy foil according to claim 1, based on an undercured epoxy adhesive having a shore Hardness D of 47 or less.

5. The epoxy foil according to claim 1, being a multilayer foil.

6. The epoxy foil according to claim 5, comprising a layer of PVC/polysulfide, polyurethane/silicon/EPDM/NBR, polyester/epoxy, acrylate/methacrylate, polypropylene, or polyethylene.

7. The epoxy foil according to claim 5, applied on a perforated foil.

8. The epoxy foil according to claims 5-7, further comprising fillers, sealants and/or pigments.

9. The epoxy foil according to claims 1-4, further comprising polysulphide, silicone and/or rubber.

10. The epoxy foil according to claim 1, in combination with an underlying adhesive.

11. Method for the preparation of the elastic epoxy foil of any one of the preceding claims, comprising mixing (a) an epoxy resin and (b) a hardener in an equivalent or non-equivalent amount.

12. Method according to claim 11, wherein the resin (a) and the hardener (b) are emulsified in a water medium, which is then vaporized.

13. The use of the epoxy foil according to claims 1-10 for the protection or sealing of wood, concrete, stone, glass, metal, plastic, textiles, etc..

## Patentansprüche

1. Elastische Epoxidfolie mit einer Dicke zwischen 0,01 und 1,50 mm, umfassend (a) ein Epoxidharz, wobei das Epoxidharz ein modifiziertes Reaktionsprodukt von Bisphenol A und Bisphenol F mit Epichlorhydrin mit einem Molekulargewicht ≤ 700 ist, und (b) einen Härter, wobei der Härter ausgewählt ist aus Polyolen, Polyetheraminen, modifizierten cycloaliphatischen Polyaminen, Polymercaptanen, Polysulfiden, Polyamincyanid oder Kombinationen davon, wobei das Epoxidharz zusammen mit einer äquivalenten oder nicht äquivalenten Menge an Härter verwendet wird.

2. Epoxidfolie nach Anspruch 1, die durch Verwendung des Härters in einem untergehärteten oder übergehärteten Verhältnis reaktiv ist.

3. Epoxidfolie nach Anspruch 1 oder 2, wobei der Härter ein Polyetheramin ist.

4. Epoxidfolie nach Anspruch 1, basierend auf einem untergehärteten Epoxidhaftmittel mit einer Shore-Härte D von 47 oder weniger.

5. Epoxidfolie nach Anspruch 1, die eine mehrschichtige Folie ist.

6. Epoxidfolie nach Anspruch 5, umfassend eine Schicht von PVC/Polysulfid, Polyurethan/Silicon/EPDM/NBR, Polyester/Epoxid, Acrylat/Methacrylat, Polypropylen oder Polyethylen.

7. Epoxidfolie nach Anspruch 5, aufgetragen auf eine perforierte Folie.

8. Epoxidfolie nach den Ansprüchen 5-7, ferner umfassend Füllstoffe, Dichtungsstoffe und/oder Pigmente.

9. Epoxidfolie nach den Ansprüchen 1-4, ferner umfassend Polysulfid, Silikon und/oder Gummi.

10. Epoxidfolie nach Anspruch 1, in Kombination mit einem darunterliegenden Haftmittel.

11. Methode zur Herstellung der elastischen Epoxidfolie nach einem der vorhergehenden Ansprüche, umfassend Mischen von (a) einem Epoxidharz und (b) einem Härter in einer äquivalenten oder nicht äquivalenten Menge.

12. Methode nach Anspruch 11, wobei das Harz (a) und der Härter (b) in einem Wassermedium, das anschließend verdampft wird, emulgiert werden.

13. Verwendung der Epoxidfolie nach den Ansprüchen 1-10 für den Schutz oder das Abdichten von Holz, Beton, Stein, Glas, Metall, Kunststoff, Textilien usw.

## Revendications

1. Feuille époxy élastique présentant une épaisseur de 0,01 à 1,50 mm, constituée de (a) une résine époxy dans laquelle la résine époxy est un produit de réaction modifié de bisphénol A et de bisphénol F avec de l'épichlorhydrine présentant une masse moléculaire ≤ 700 et (b) d'un durcissant, dans laquelle le durcissant est choisi parmi des polyols, des polyéther amines, des polyamines cycloaliphatiques modifiées, des polymercaptans, des polysulfures, des polyaminecyanures, ou des combinaisons de ceux-ci, dans laquelle la résine époxy est utilisée avec une quantité équivalente ou non-équivalente de durcissant.

2. Feuille époxy selon la revendication 1, laquelle est réactive en utilisant le durcissant dans un rapport sous-durci ou surdurci.

3. Feuille époxy selon la revendication 1 ou la revendication 2, dans laquelle le durcissant est une polyéther amine.

4. Feuille époxy selon la revendication 1, sur la base d'un adhésif époxy non durci présentant une dureté shore D de 47 ou inférieure.

5. Feuille époxy selon la revendication 1, étant une feuille multicouche.

6. Feuille époxy selon la revendication 5, comprenant une couche de PVC/polysulfure, de polyuréthane/silicium/EPDM/NBR, de polyester/époxy, d'acrylate/méthacrylate, de polypropylène, ou de polyéthylène.

7. Feuille époxy selon la revendication 5, appliquée sur une feuille perforée.

8. Feuille époxy selon les revendications 5-7, comprenant de plus des charges, des agents d'étanchéité et/ou des pigments.

9. Feuille époxy selon les revendications 1-4, comprenant de plus du polysulfure, du silicone et/ou du caoutchouc.

10. Feuille époxy selon la revendication 1, en combinaison avec un adhésif en sous-couche.

11. Procédé pour la préparation de la feuille époxy élastique selon l'une quelconque des revendications précédentes, comprenant le mélange (a) d'une résine époxy et (b) d'un durcissant dans une quantité équivalente ou non-équivalente.

12. Procédé selon la revendication 11, dans lequel la résine (a) et le durcissant (b) sont émulsionnés dans un milieu d'eau, lequel est ensuite vaporisé.

13. Utilisation de la feuille époxy selon les revendications 1-10 pour la protection ou l'étanchéité du bois, du béton, de la pierre, du verre, du métal, du plastique, de textiles, etc...
